# EUROPEAN PATENT APPLICATION

(11) **EP 1 176 789 A2**
(43) Date of publication of application: **30.01.2002**
(21) Application number: 01305962.1
(22) Date of filing: 11.07.2001
(51) Int. Cl.: H04M 1/2745

(54) **Telephone directory**

(30) Priority: 24.07.2000 US 624171
(71) Applicant: Lee, Wai Tin, Tai PO (HK); Wong, Siu Pang, Tsuen Wan (HK)
(72) Inventor: Lee, Wai Tin, Tai PO (HK); Wong, Siu Pang, Tsuen Wan (HK)
(74) Representative: Godwin, Edgar James

(57) **Abstract**

A telephone has a directory memory, a keyboard and a display arranged to display telephone numbers (and names) when a selected key is pressed. Keys are manually selected using a user's own memory of the first number (or first two or three numbers). As each selected key is pressed in turn, the numbers (or names) displayed on the screen comprise progressive sub-divisions. Such a method of "searching" a directory memory is comprehensive and can be carried much that other searches that may presently used.

## Description

The invention relates to a telephone directory.

The invention relates more particularly to accessing information stored in an electronic telephone directory of a telephone using a manually operable keyboard. Once a required number has been identified in the directory, the user can call the number as required.

Various speed dialing methods to facilitate the use of telephones have been employed for a long time. Recently with the popularity of mobile phones and telephones equipped with a caller identification service, a caller display unit is becoming a normal accessory. Labeling the memories of callers or called numbers is no longer limited to simple short codes, which were in printed form before, but can now be a series of alphanumeric characters (herein referred to as a "label") to be displayed on the display unit on the telephone. Thus, a directory memory provided in a telephone now usually consists of a telephone number and an associated label. The label can be manually entered by user or coming from the information obtained from the caller identification service.

Therefore to search and recall a memory, the user or caller can either search by a number or search by a label. To search by a telephone number normally involves scrolling with "cursor" keys (on a telephone keyboard) to reveal the most recently dialed out or received numbers. In a conventional telephone, there is usually only one number that can be recalled, i.e. the last number redial. Even in more advanced telephones or in mobile phones, the size of "selection list" in the telephone stored directory, which is a group of telephone numbers from which the caller can choose, is usually limited and cannot include all the telephone numbers stored in the telephone. It is common for a mobile phone to offer a selection list of the 10 last outgoing numbers and the 10 last received numbers only.

Therefore, this method only allows the recall from the directory of numbers that have been recently dialed out or received. A telephone number stored in the telephone and not having been accessed for a considerable time will not be included in the selection list. Also, even if a desired telephone number is on the selection list, it has to be scrolled out one by one, usually in the sequence of order of usage. There is no quicker means even if the caller has prior information, e.g. if the caller knows the first few digits, to speed up the search.

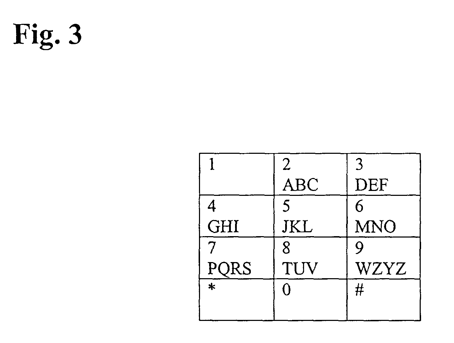

To search by labels, the memory or telephone directory is interrogated by entering all the characters of the label, or scrolling sequentially through the selection list formed by all the memories matching to the characters of a partially entered label. Due to the limited number of keys on a telephone keypad, the arrangement of a typical telephone keypad is usually as shown in Fig 3.

Successive digits and alphabets are displayed one at a time per key press. To enter an alphabet requires the caller to press the corresponding key until the desired alphabet letter is scrolled out. For example, to select letter "C" requires pressing numeral "2" key four times. With such a cumbersome routine, a caller tends to enter as few characters as he can and then begins a search through the selection list. However, selection with only a few characters results in a larger selection list that the caller must scroll through to find the desired number.

It is an object of the invention to overcome or at least reduce these problems.

According to one aspect of the invention there is provided a method of recalling telephone numbers in a telephone having a telephone directory memory, a display screen and a manually operable telephone keyboard, including an interface that is programmed to respond to operations of the keyboard and initiate selection displays on the screen, the method including operating a first caller memory selected key and a second caller memory selected key on the keyboard in sequence so as to display on the screen in turn a first selection corresponding to the first key selection and then a second selection, being a sub-division of the first selection, based on the combined first and second key selections.

The method preferably includes operating a third key so as to provide a third selection, being a sub-division of the combined first and second key selections, based on the combined first, second and third key selections.

The telephone numbers items may be selected by labels, the operation of the keys being chosen according to their alphanumeric characters.

According to another aspect of the invention there is provided a telephone having a telephone directory memory, a display screen, and a manually operable keyboard, including an interface programmed to respond to operations of the keyboard to display selected telephone details of callers and called numbers on the screen, in which the interface is arranged to provide lists of such details according to at least two selections based on the operation of corresponding keys on the keyboard chosen according to a user's memorised telephone detail such that a first list corresponds to a first key selection and a second list displayed on the screen is a sub-division of a first list the sub-division corresponding to a second key selection.

The interface is preferably programmed to respond to operation of a third key to provide a list of the said details being a sub-division of the second list corresponding to a third key selection.

A mobile telephone according to the invention will now be described by way of example with reference to the accompanying drawings in which :-
Figure 1 is an isometric view of the telephone;
Figure 2 is a schematic diagram of part of the telephone;
Figure 3 is a typical keyboard arrangement for the telephone;
Figure 4 is a flow chart for recalling telephone details using a numeral input; and
Figure 5 is a flow chart for recalling telephone details using a label input.

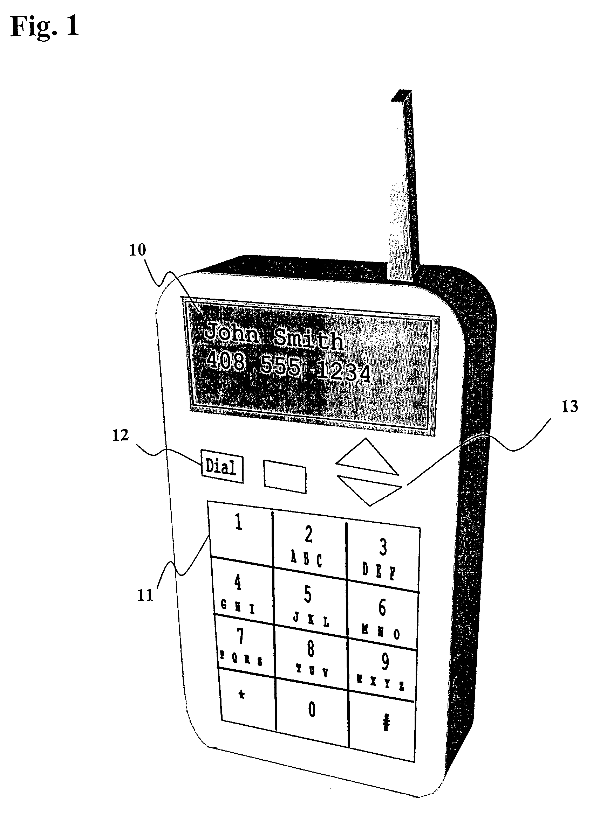

Referring to the drawings, in Figure 1 a generally conventional mobile telephone has a liquid crystal display (LCD) screen 10 and a keyboard 11. A "dial" key 12, mounted on a front of the telephone when actuated by a caller, directs the telephone to transmit a telephone number shown on the screen 10 as a dialling signal to a telephone connection.

Scroll keys 13 and other operating key are also mounted on the front of the telephone.

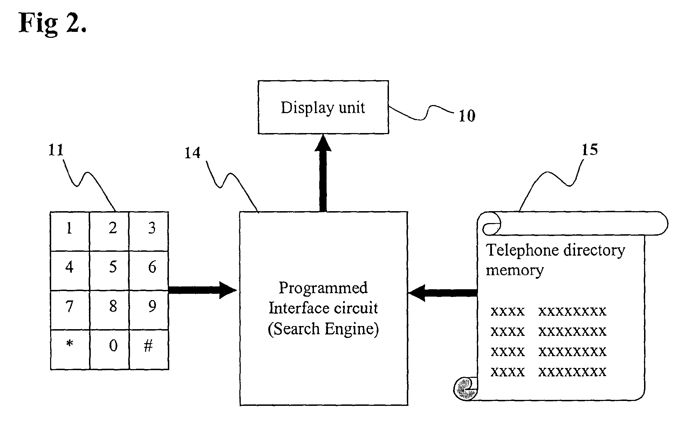

In Figure 2, the keyboard 11 is connected by a programmed interface circuit (or search engine) 14 to a telephone directory memory 15. Such components are known per se except that in embodiments of the invention the interface circuit 14 is arranged to carry out special novel tasks and functions as will be explained more fully below.

By way of a general description of the operations and advantages of embodiments of the invention, a mobile telephone users actions will now be described.

Usually when the caller wants to recall telephone details stored in the telephone directory memory, he has certain prior information on hand, e.g. the first few digits of a desired number, or the first few characters of a label corresponding to the desired number. Embodiment of this invention makes use of such caller prior information. The interface circuit 14 is programmed to make use of this information. The caller makes use of appropriate techniques to incorporate with the search engine to make selection list of telephone details adaptive and complete.

The memory of the telephone directory is arranged in a sequence determined by the frequency of usage. This is already known, as for example described in US Patent No. 5,267,308. Such arrangement provides a more logical scheme to match the dialing habit of the caller. Seldom accessed numbers are put in lower priority, but still included in the selection list in this case. When the caller enters the first digit/character, the search engine interface circuit (or search engine) 14, searches the entire database 15 (including all the memory stored in the telephone and a receiving buffer if there is caller identification service). Only memories with the same first digit/character will be put in the selection list and displayed on the screen 10. The caller can then scroll through all entries in a selection (first) list (with priority preset) or can then enter a second digit/character. The search engine will immediately update the selection list (being a sub-division of the first list) and only memories with the same two digits/characters are then displayed. Similarly, the selection list will be updated (further sub-divided) each time when a third or more keys are entered.

This process repeats until the required telephone number appears on the screen 10 and then the caller can actuate the "dial" key 12 to dial out the number. Since the memory in the telephone is quickly selected, the search for an entire database is easily achievable. The search is therefore rapid and yet included all entries in the stored telephone directory.

Moreover, the selection list can be updated automatically every time a new digit/character (prior information) is entered. The mechanism quickly converges to the desired number, usually in a few iterations only, and thus avoiding unnecessary scrolling of irrelevant telephone number data. An ability to let the caller scroll through the selection list and choose an entry at any time provides flexibility especially if two or more very similar numbers/labels exist.

The arrangement to avoid the previous cumbersome inputting of alphanumeric characters on a typical telephone keypad is now described. The search engine extends its search on each "key" being entered, that is to say, there is no need to press the keys twice or more. Thus, instead of pressing several times on the same key to scroll out an exact character, the caller only needs to press the key that corresponds to the character once, i.e. press "2" once for "C". The search engine will put in the selection list all labels with a first character matching to all corresponding characters of the key being entered. For examples, if "2" is pressed, the search engine will list out all labels that begin with "2", "A", "B" and "C".

When a second key is entered, the search engine will adaptively search for combinations of characters corresponding to the two keys. For examples, if "3" is pressed after "2", there will be combinations of "23", "2D", "2E", "2F", "A3", "AD", "AE", "AF", "B3", "BD", "BE", "BF", "C3", "CD", "CE" and "CF". All labels that begin with any of the above combinations in the first list will now be put into this new selection list. When a third or more keys are entered, similarly, all appropriate combinations will be selected. Nevertheless, since there are a limited meaningful combinations, the search for the entire database is feasible, complete and quick.

In an example using a telephone number redial function, the following table of possible telephone numbers, arranged in priority from top to bottom, in a telephone memory directory are considered:

| | |
|---|---|
| KEN | 408 555 1234 |
| JANE | 411 203 8547 |
| BOB | 947 468 2958 |
| JENNY | 411 365 0926 |
| JOHN | 408 603 2122 |
| ALAN | 508 230 0485 |
| JEFF | 416 242 8437 |
| DAVID | 408 548 9761 |
| ADAM | 947 468 1467 |
| JAMES | 558 274 0938 |

Suppose the caller wants to call JEFF (the 7^{th} entry). A function key normally provided on the telephone is used to select a telephone directory memory search. It is presumed that the caller knows that JEFF's number begins with "416", and so the caller presses 4, then 1 and then 6. The keys display sequence on the screen 10 and the content of the selection list will be:-

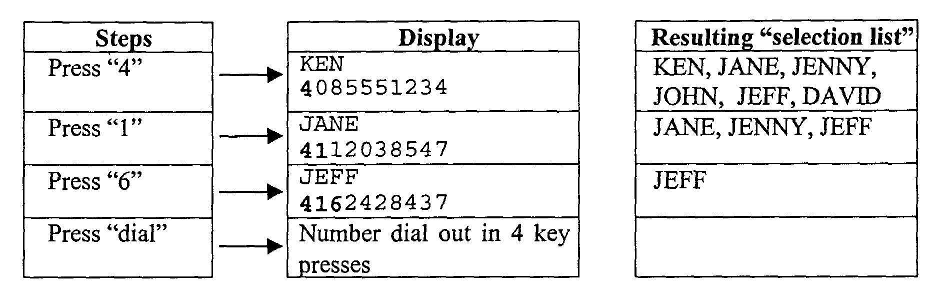

Two different indications are displayed on the screen 10. The actual digits being entered are displayed in bold, while the other digits are shown normally. The displayed digits change as the caller enters more digits in sequence.

The caller can also search using cursor keys 13 after "4" and "1" are entered, if he only knows that JEFF's number begins with "41".

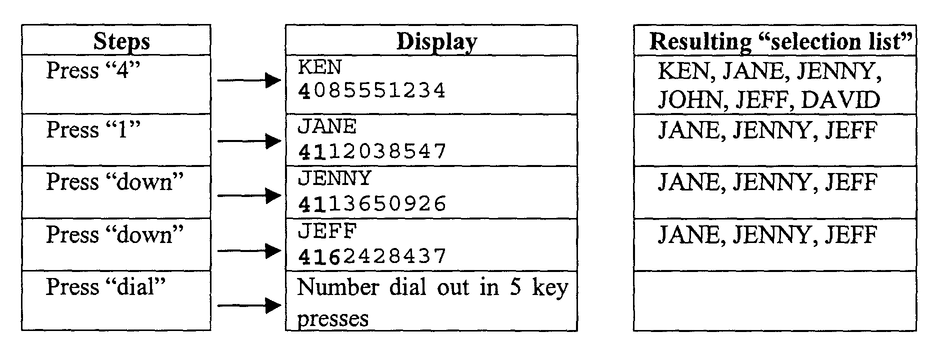

In another example, if the caller wants to call JAMES, eleven key presses are needed in a conventional method, whereas only two key presses "5" and "5" are required in embodiments of this invention if the caller knows that JAMES number starts will "55".

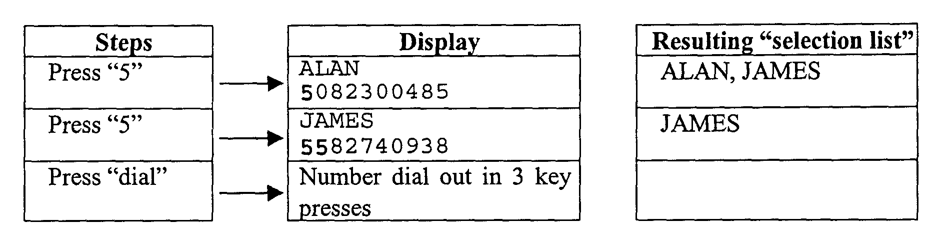

These methods provide complete searches, i.e. all memorised telephone numbers in the telephone will be looked up, instead of being limited to recently accessed numbers, although, as preferred, the order of numbers displayed from the selection list is arranged with priority according to the frequency of usage. Such a prioritised order provides a quick convergence to numbers normally desired, by updating the selection list every time an additional digit/character is entered. The search will be much quicker in practice reducing unnecessary scrolling of irrelevant telephone numbers.

It will be appreciated that the methods do not require additional function keys or require the caller to memorize any special key sequences. It is natural and intuitive for the caller to enter the first few known digits and the search can be arranged to begin automatically once a key is pressed.

In a situation where the caller wants to find a telephone number by a label function key 'alpha' is first pressed so that the telephone is made ready to accept alphanumerical characters instead of digits.

Suppose the caller wants to recall JEFF's telephone number.

In a conventional arrangement, the search normally involves pressing a functional key several times. The caller must then press "5" to select "J", press "3" twice to select "E", and press "3" three times to select "F"; that is a minimum of six key presses to select "JEF".

In the present invention the required search sequence is:

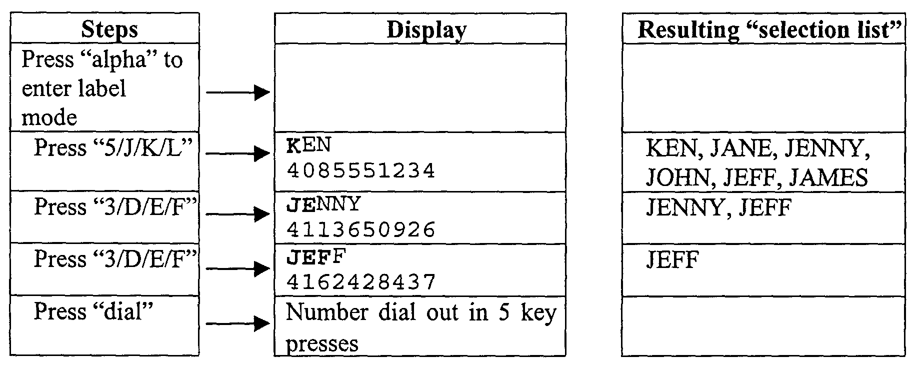

Alternatively, the caller can combine the "up/down" cursor keys with the search as below:-

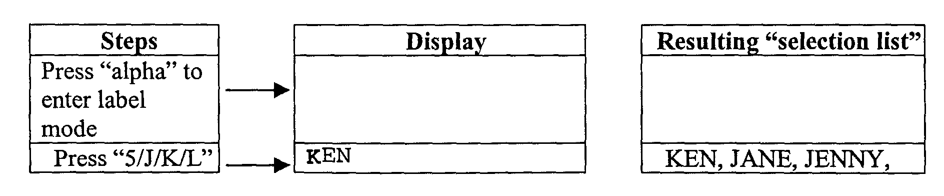

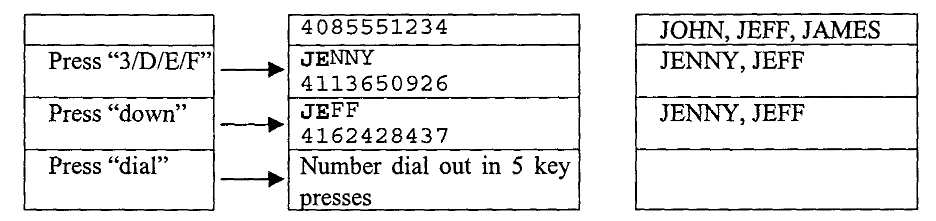

These search methods are natural and intuitive and the caller needs to press only one key per character, and yet the searches still complete and provide quick convergence to the desired result.

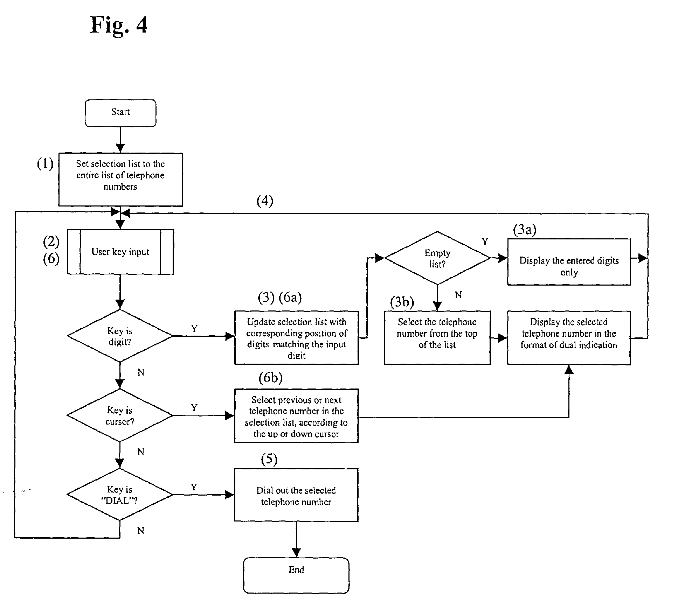

In Figure 4, the flow chart illustrates searching for a telephone number in the directory memory by digits:-
(1) The initial selection list consists of the entire list of telephone numbers, arranged according to the frequency of usage.
(2) The user inputs a first digit from his own information (memory).
(3) The telephone updates a selection list by only including the telephone numbers having the same first digit.
   (3a)If there is no match (empty list), the screen 10 displays only the first digit that has been entered.
   (3b)If there is/are one or more telephone numbers in the list, the top of the list is selected and is displayed, with the user entered digit in bold.
(4) The telephone waits for the user to enter a next digit.
(5) If the telephone shows the desired telephone number, the user can dial out the whole number immediately by actuating a "dial" key.
(6) If the telephone does not show the desired telephone number, the user can either
   (6a)Input a next digit and the telephone then generates a new selection list based on the previous list by matching the entered digit to a digit at the next position in the memorised telephone numbers. The process from (3) to (6) is then repeated, until the user finally actuates the "dial" key; or
   (6b)Press "up" or "down" using the scroll keys. The telephone displays the previous or next entry in the selection list and repeats from (4) to (6).

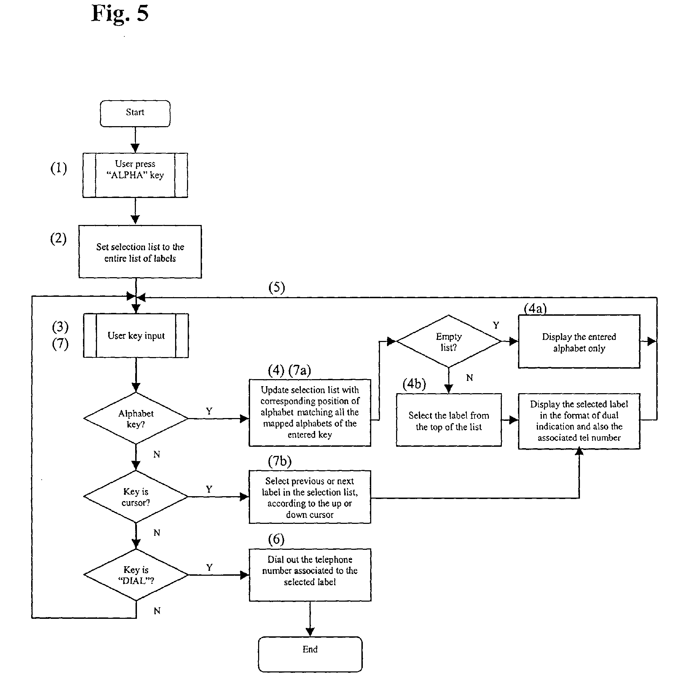

In Figure 5, the flow chart illustrates searching for a telephone number by (looking up) labels:-
(1) The user actuates an 'alpha' key to invoke the label mode.
(2) The initial selection list consists of the entire list of labels, preferably arranged according to the frequency of usage.
(3) The user then presses the key corresponding to the first letter of the label. (It will be noted that the chosen key is only pressed once, even though each key may represent three or more letters in fact.)
(4) The telephone updates the selection list by only including the labels with the first letter matching any one of the letters corresponding to the key pressed.
   (4a)If there is no match (empty list), the screen 10 will only display the letters corresponding to the entered key.
   (4b)If there is/are one or more labels in the list, the top of the list is selected and is displayed, with the user entered letters in bold.
(5) The telephone waits for the user to press a next key.
(6) If the telephone shows the desired label or telephone number, the user can dial out the whole number immediately by actuating a "dial" key.
(7) If the telephone does not show the desired label or telephone number, the user can either
   (7a)Input a next letter, so that the telephone generates a new selection list based on the previous list by matching the letters of the entered key to the letters at a next position in the label being searched. The process from (4) to (7) is then repeated, until the user finally actuates the "dial" key; or
   (7b) Press "up" or "down" using the scroll keys. The telephone displays the previous or next entry in the selection list and repeats from (5) to (7).

## Claims

1. A method of recalling telephone numbers in a telephone having a telephone directory memory, a display screen and a manually operable telephone keyboard, including an interface that is programmed to respond to operations of the keyboard and initiate selection displays on the screen, the method including operating a first caller memory selected key and a second caller memory selected key on the keyboard in sequence so as to display on the screen in turn a first selection corresponding to the first key selection and then a second selection, being a sub-division of the first selection, based on the combined first and second key selections.

2. A method according to claim 1, in which the method includes operating a third key so as to provide a third selection, being a sub-division of the combined first and second key selections, based on the combined first, second and third key selections.

3. A method according to claim 1 or 2, in which the telephone numbers items are selected by labels, the operation of the keys being chosen according to their alphanumeric characters.

4. A telephone having a telephone directory memory, a display screen, and a manually operable keyboard, including an interface programmed to respond to operations of the keyboard to display selected telephone details of callers and called numbers on the screen, in which the interface is arranged to provide lists of such details according to at least two selections based on the operation of corresponding keys on the keyboard chosen according to a user's memorised telephone detail such that a first list corresponds to a first key selection and a second list displayed on the screen is a sub-division of a first list the sub-division corresponding to a second key selection.

5. A telephone according to claim 4, in which the interface is programmed to respond to operation of a third key to provide a list of the said details being a sub-division of the second list corresponding to a third key selection.
